Europäisches Patentamt

European Patent Office

Office européen des brevets

(11) Publication number: **0 023 919**
**B1**

# (12) EUROPEAN PATENT SPECIFICATION

(45) Date of publication of patent specification: **26.09.84**

(21) Application number: **80900405.4**

(22) Date of filing: **13.02.80**

(86) International application number:
**PCT/DK80/00012**

(87) International publication number:
**WO 80/01638 21.08.80 Gazette 80/19**

(51) Int. Cl.³: **A 01 B 45/02,** E 02 F 5/30,
B 66 C 1/42

(54) **A GRUBBER IMPLEMENT.**

(30) Priority: **14.02.79 DK 612/79**
**16.03.79 DK 1084/79**

(43) Date of publication of application:
**18.02.81 Bulletin 81/07**

(45) Publication of the grant of the patent:
**26.09.84 Bulletin 84/39**

(84) Designated Contracting States:
**AT CH DE FR GB NL SE**

(56) References cited:
**DE-B-1 017 393**
**DE-B-1 784 637**
**FI-B- 40 058**
**GB-A-1 015 160**
**GB-A-1 273 941**
**GB-A-1 473 253**
**US-A-3 120 281**

(73) Proprietor: **SPRINGER, Hans-Werner**
**Allingvej 3, Nisset**
**DK-8632 Lemming (DK)**

(72) Inventor: **SPRINGER, Hans-Werner**
**Allingvej 3, Nisset**
**DK-8632 Lemming (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

## Description

This invention relates to a grubber implement for deep loosening treatment of the soil comprising a chassis adapted to be mounted behind a traction vehicle and provided with a downwardly projecting grubber tooth which tooth is shaped so as to have a substantially straight front edge, is pivotally connected to the chassis and is connected to power operated position control means operable to effect an adjustment of the angular position of the tooth while the tooth is operating in the soil, the tooth being adjustable to generally assume a downwardly and forwardly inclined position.

Said grubber implement is known from DE—A—1,784,637. The active portion of the tooth is a lowermost wedge member, which, when forced through the soil, is intended to subject the soil to a lifting action. Practice shows, however, that the lifting is normally confined to the area immediately above the path of the wedge member, i.e. the result is a local soil compaction and the formation of a tubular channel behind the wedge member. Thus, the soil is not subjected to the ideal lifting action for the breaking of already existing soil compactions, and the forming of the said channel is disadvantageous in that it causes the water as needed by the soil to be drained off rapidly. Of course, the draining of surface excess water is advantageous per se, but it would be much more attractive to generally loosen the soil and thus enable it to take up the water, whereby the soil would be largely improved for plant growing.

The known grubber tooth is angularly adjustable in order to enable a corresponding angular adjustment of the active earth lifting surface of the wedge member, this being connected with a change of the necessary traction power and the efficiency of the wedge member. The wedge member is mounted on a tooth member as serving to transfer the movement of the traction vehicle to the wedge member, whereby the tooth member cuts its way through the earth. Such grubbing or subsoiling should go down to a depth of some 80 cm, and the traction force necessary for dragging the almost vertical tooth member, even when its front edge is sharpened, is very high.

It is the purpose of this invention to provide an implement which is of simple design and shows outstanding properties as to both relatively low traction force requirements and very high soil improvement effects substantially without any kind of serious associated negative effects.

The grubber implement according to the invention is characterized in that the tooth can be adjusted up to at least 30° with respect to the vertical direction and that the tooth has a non-pointed cross-section.

The grubber implement according to the invention is very effective, i.e. by having a simple grubber tooth which, in use, assumes a pronounced forwardly inclined position, and gives an excellent lifting action all along the inclined front edge thereof, whereby no compaction can occur. Experiments have shown that the tooth is relatively very easy to pull through the soil when it is well inclined and that by changing its inclination towards the vertical it will come to a critical angular position determined by the character of the soil, from which a further increase of the tooth inclination will almost immediately result in a really drastically increased moving resistance, viz. the same much higher resistance as normally created by the teeth of the known grubber implements. It has been found that it is impossible to predict the said critical inclination for a given area and that it may even vary considerably along one single working track, so it is an important feature, therefore, that the tooth inclination is adjustable to said at least 30° or preferable at least 45° while the tooth is in actual operation. The tooth is still easy to drive when it assumes an undercritical inclination, but it is of course important to adjust it to a position as steep as possible in order to make it operate to a depth as large as possible.

In addition to this very important result of the invention there is obtained another result which is probably even still more important, viz. a surprisingly high soil improving effect without associated negative consequences. A complete description of the effect of the invention in this respect tends to be very voluminous and scientific, and in this connection it is deemed sufficient to explain that the generally inclined grubber tooth exerts a raising action on the engaged soil portions, and when it meets a compacted soil layer it will thus tend to locally lift the layer, whereby the layer is subjected to a breaking effect producing capillary cracks even way out from the sides of the tooth.

The tooth may show a tooth point for increased wear resistance, but it has no broad wedge member as according to the prior art, because it is now the entire tooth, which constitutes the active lifting wedge in the subsoil area, and the necessary traction power is substantially reduced already for this reason. The soil lifting effect occurs along the entire effective height of the tooth, and the tooth, therefore, is not liable to produce any vertical soil compaction, such that no stabilized, undesired drain channel is left behind the tooth.

The tooth groove itself is not caused to show any wide portions or any pronounced wall compaction, because the tooth front edge is not sharp, but pronounced blunt so as to promote a local soil lifting more than a lateral displacement of the soil engaged by the tooth front edge. Thus, the said considerable reduction of the necessary traction force is obtainable even when the front edge of the tooth is pronounced blunt, because the tooth is pronounced inclined.

In accordance with a further feature of the invention there is provided support wheels to the chassis for providing a counter pressure on the earth which tends to be lifted by the grubbing treatment.

It is noted that from US—A—3,120,281 is known per se a grubber implement which has the same limitations of that described in the aforementioned German—A—1,784,637.

As explained below the implement according to the invention furthermore shows a plurality of further advantages due to the angular adjustability or powered angular movability of the grubber tooth.

A preferred embodiment of a grubber implement according to the invention is illustrated in the accompanying drawing, in which:

Fig. 1 is a perspective view of the implement,

Fig. 2 is a perspective view of a detail thereof, and

Figs. 3—6 are side views illustrating different application of the implement.

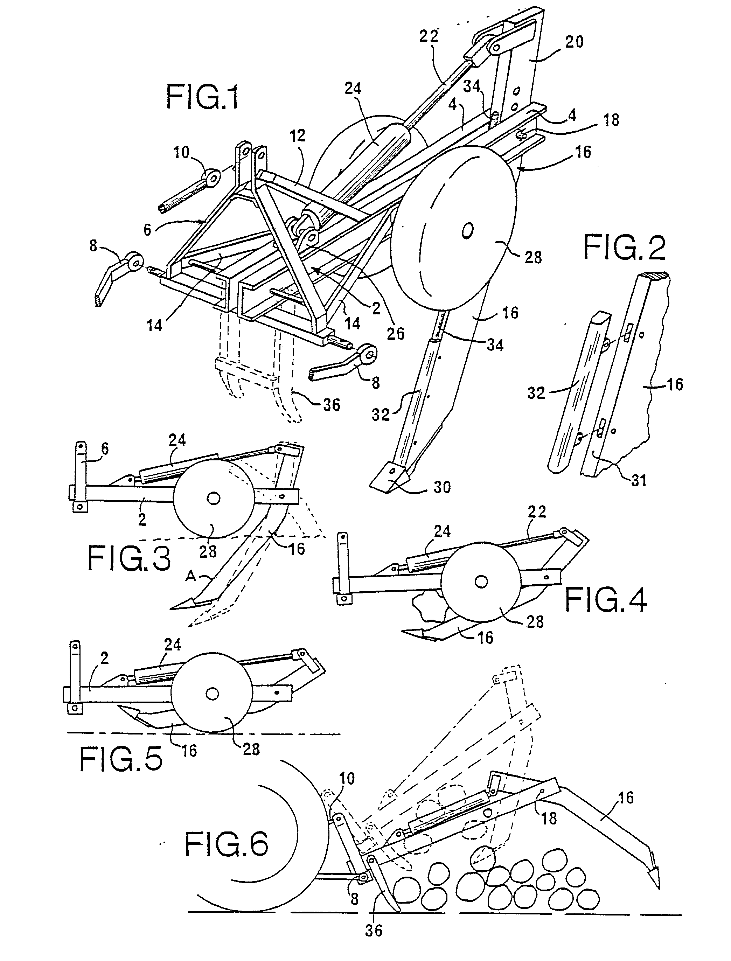

The implement shown in Fig. 1 comprises a horizontal chassis 2 made of two opposed iron beams 4 being frontwise provided with a mounting structure 6 enabling the implement to be connected with a standard three-point lift system of an agricultural tractor, comprising opposed lift arms 8 and a top rod 10. The mounting structure 6 is connected with the main chassis 2 by means of braces 12 and 14. At the rear end of the chassis 2 is mounted a grubber tooth 16 which is pivotally held by a pivot pin 18 between the two beams 4. The tooth 16 projects downwardly, but has an upper extension 20, the top of which is pivotally connected with the piston rod 22 of a hydraulic cylinder 24 having its opposite end pivoted to brackets 26 secured to the beams 4 to hereby make the angular position of the tooth 16 adjustable. The chassis 2 is provided with wheels 28, e.g. ordinary automobile wheels.

The downwardly projecting portion of the tooth 16 is substantially straight, though bottomwise the tooth is provided with an interchangeable, forwardly protruding tooth point member 30 as well known per se. As shown in Fig. 2 the lower front edge portion of the tooth 16, as designated 30, is prepared for receiving a separate front edge member 32 being of a wear resistant material and having a generally rounded front edge configuration. Above this member 32 the tooth front edge may be constituted by a piece of round iron 34 welded to the front edge of the body of the tooth 16.

As illustrated in Fig. 3 the tooth 16 may be adjusted to assume a forwardly inclined position designated A, in which is is relatively easy to pull through the soil, e.g. with an inclination somewhere between 30° and 45° with the vertical direction. The cylinder 24 is double acting and is connected with an operation handle adjacent the driver's position in the tractor, whereby the tooth inclination is easily adjusted even during the grubbing work. The tooth should stand as steep as possible, and the operator will easily notice when it reaches its optimal position during the work, because further tilting of the tooth towards the vertical will almost abruptly show the consequence that the moving resistance of the tractor is enormously increased.

When the height position of the tractor lift is properly adjusted the inclined tooth will provide a downward pressure on the rear end of the tractor or even on the entire tractor, and the tractor, therefore, may operate even on a very slippery ground with a remarkable speed.

In operation the inclined tooth will exert a certain lift action on the soil layers, sufficiently to cause an important crack formation therein over an area substantially broader than the tooth track itself. This lift action is highly important, and it is promoted by the tooth having a blunt front edge, this of course being a remarkable feature. It is not desired to generally cause a resulting lifting off of earth, and such action is counteracted by the wheels 28.

Apart from its described main function the implement shows a row of further possibilities:

A) In operation in very hard soil the tooth may be reciprocated by means of the cylinder 24 to promote the penetration. A vibrator unit (not shown) associated with the tooth may serve the same purpose.

B) The tooth is usable for digging up, by its general movement or by actuation of the cylinder 24, various types of bodies such as big stones and root pieces from the earth. It is even usable for cutting roots and thus for stump clearing purposes.

C) As illustrated in Fig. 4 the tooth is usable to pick up stones or the like and clamp them against the underside of the chassis 2, whereafter the entire implement may be raised by the tractor lift and used for transportation of the clamped body. As shown in Figs. 1 and 6 the chassis may be provided with a front end claw 36 usable — especially with the wheels 28 removed — for enabling large items or e.g. bundles of trunks or the like to be picked up and transported. The wheels 28 may be height adjustably mounted, also for this purpose. The claw 36 may be freely rearwardly pivotal.

D) As shown in Fig. 5 the tooth is pivotal into a laid down transport position, in which the implement is towable, supported by the wheels 28.

E) In the same position of the tooth the implement can be moved by hand, the wheels 28 being located near its center of gravity.

F) The tooth is lowerable into its operative position even at a location closely against a rear hindrance such as a building wall, because it is lowerable from a rearwardly projection (see Fig. 6) combined with reverse driving of the tractor and forward pivoting of the tooth.

G) Should the tractor get stuck the tooth 16 is usable for pushing or pulling it by actuation of the cylinder 24.

H) The grubber tooth, of course may be used for laying cables or pipes, when fitted with the necessary equipment as well known in the art. A special possibility is to supply water to the tooth groove through suitable channel or tubing means on the tooth. Due to its effect in the soil the grubber is particularly advantageous for the laying of evaporator pipes for heat pump systems.

The implement may be largely modified within the scope of the invention, e.g. by having a hand driven oil pump for actuation of the cylinder 24 if the implement is moved by means other than a tractor, e.g. pulled by a cable, whereby the implement is usable even in otherwise difficult areas. The cylinder 24 may be replaced by other suitable means for positively adjusting the angular position of the tooth.

## Claims

1. A grubber implement for deep loosening treatment of the soil comprising a chassis (2) adapted to be mounted behind a traction vehicle and provided with a downwardly projecting grubber tooth (16) which tooth is shaped so as to have a substantially straight front edge (32), is pivotally connected to the chassis (2) and is connected to power operated position control means (22, 24) operable to effect an adjustment, of the angular position of the tooth (16) while the tooth is operating in the soil, the tooth being adjustable to generally assume a downwardly and forwardly inclined position, characterized in that the tooth (16) can be adjusted up to at least 30° with respect to the vertical direction and that the tooth has a non-pointed cross-section.

2. An implement according to claim 1, characterized in that said tooth (16) is adjustable up to at least 45° with respect to the vertical direction.

3. An implement according to claim 1—2, characterized in that the chassis is provided with ground support wheels (28).

4. An implement according to claim 1, in which the front edge of the tooth (16) is of generally convex rounded cross-section, e.g. as provided on an exchangeable wear rod member (32) mounted frontwise on the tooth at least along a partial length thereof.

## Revendications

1. Un instrument de défrichage pour un traitement d'ameublissement profond du sol, comprenant un châssis (2) pouvant être monté derrière un véhicule de traction et muni d'une dent de défrichage (16) s'avançant vers le bas, laquelle dent est formée de telle sorte qu'elle possède un bord d'avant substantiellement droit (32), étant reliée de façon pivotante au châssis (2) et étant reliée aux moyens de contrôle de position (22, 24) à commande mécanique qui fonctionne pour effectuer un ajustement de la position angulaire de la dent (16) lorsque la dent opère dans le sol, la dent étant réglable pour occuper généralement une position incliné vers le bas et vers l'avant, caractérisé en ce que la dent (16) est réglable jusqu'au moins 30° par rapport à la direction verticale et que la dent a une section transversale non-pointue.

2. Un instrument selon la revendication 1, caractérisé en ce que ladite dent (16) est réglable jusqu'au moins 45° par rapport à la direction verticale.

3. Un instrument selon les revendications 1—2, caractérisé en ce que le châssis est muni de roues de support de terre (28).

4. Un instrument selon la revendication 1, dans lequel le bord d'avant de la dent (16) a une section transversale généralement convexe, arrondie, par exemple comme prévue sur une pièce de barre d'usure remplaçable (32) montée de face sur la dent au moins lelong d'une partie de sa longueur.

## Patentansprüche

1. Grubbergerät zur Tiefenlockerung des Bodens, versehen mit einem Gestell (2) zum Anbau an eine Zusmaschine, und mit einem sich nach unten erstreckenden Grubberzahn (16), der so ausgebildet ist, dass er eine im wesentlichen gerade Vorderkante (32) aufweist, drehbar mit dem Gestell (2) verbunden ist und mit kraftbetätigten Lagesteuermitteln (22, 24) verbunden ist, die eine Einstellung der Winkellage des Zahnes (16) bewirken, während der Zahn im Boden arbeitet, wobei der Zahn einstellbar ist, um im allgemeinen eine nach unten und nach vorn geneigte Lage einzunehmen, dadurch gekennzeichnet, dass der Zahn (16) bis mindestens 30° relativ zur Vertikallage einstellbar ist, und dass der Zahn einen nicht-gespitzten Querschnitt aufweist.

2. Gerät nach Anspruch 1, dadurch gekennzeichnet, dass der genannte Zahn (16) bis mindestens 45° relativ zur Vertikallage einstellbar ist.

3. Gerät nach Ansprüchen 1—2, dadurch gekennzeichnet, dass das Gestell mit Bodenstützrädern (28) versehen ist.

4. Gerät nach Anspruch 1, in dem die Vorderkante des Zahnes (16) einen im allgemeinen konvexen gerundeten Querschnitt aufweist, z.B. wie vorgesehen an einer auswechselbaren Schleisstange (32), die vorn am Zahn wenigstens über eine Teillänge desselben angeordnet ist.

FIG.1

FIG.2

FIG.3

FIG.4

FIG.5

FIG.6

1